(19)

**Europäisches Patentamt**
**European Patent Office**
**Office européen des brevets**

(11) **EP 4 079 071 B1**

(12) **EUROPEAN PATENT SPECIFICATION**

(45) Date of publication and mention
of the grant of the patent:
**24.06.2026 Bulletin 2026/26**

(21) Application number: **20901168.3**

(22) Date of filing: **13.11.2020**

(51) International Patent Classification (IPC):
*H04W 72/00* (2023.01)    *H04L 27/00* (2006.01)
*H04L 1/00* (2006.01)    *H04L 1/18* (2023.01)

(52) Cooperative Patent Classification (CPC):
**H04L 1/0026; H04L 1/0003; H04L 1/0009;**
**H04L 1/0015; H04L 1/0025; H04L 1/0031;**
H04L 1/203

(86) International application number:
**PCT/FI2020/050748**

(87) International publication number:
**WO 2021/123494 (24.06.2021 Gazette 2021/25)**

(54) **ERROR PROBABILITY ASSISTED LINK ADAPTATION**

FEHLERWAHRSCHEINLICHKEITSGESTÜTZTE VERBINDUNGSANPASSUNG

ADAPTATION DE LIEN ASSISTÉE SELON UNE PROBABILITÉ D'ERREUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **19.12.2019 US 201962950496 P**

(43) Date of publication of application:
**26.10.2022 Bulletin 2022/43**

(73) Proprietor: **Nokia Technologies Oy**
**02610 Espoo (FI)**

(72) Inventors:
• **KELA, Kalle Petteri**
**20780 Kaarina (FI)**
• **KURU, Lauri**
**02270 Espoo (FI)**
• **VEIJALAINEN, Teemu**
**00210 Helsinki (FI)**
• **MOILANEN, Jani**
**00200 Helsinki (FI)**
• **POCOVI, Guillermo**
**9000 Aalborg (DK)**

• **LI, Zexian**
**02340 Espoo (FI)**

(74) Representative: **Mudge, Kevin**
**Bryers Intellectual Property Ltd**
**Bristol & Bath Science Park**
**Dirac Crescent**
**Emersons Green**
**Bristol BS16 7FR (GB)**

(56) References cited:
**EP-A1- 1 220 472        EP-A1- 3 113 368**
**EP-A1- 3 206 322        WO-A1-2016/138957**
**WO-A1-2019/173957      WO-A1-2019/173957**

• **ZTE: "CSI Feedback Enhancements for MUST",**
**vol. RAN WG1, no. Anaheim, USA; 20151115 -**
**20151122, 15 November 2015 (2015-11-15),**
**XP051003032, Retrieved from the Internet**
**<URL:http://www.3gpp.org/ftp/**
**Meetings_3GPP_SYNC/RAN1/Docs/> [retrieved**
**on 20151115]**

**Description**

FIELD:

Some example embodiments may generally relate to mobile or wireless telecommunication systems, such as Long Term Evolution (LTE) or fifth generation (50) radio access technology or new radio (NR) access technology, or other communications systems. For example, certain embodiments may relate to systems and/or methods for link adaptation and/or obtaining channel state information (CSI).

BACKGROUND:

Examples of mobile or wireless telecommunication systems may include the Universal Mobile Telecommunications System (UMTS) Terrestrial Radio Access Network (UTRAN), Long Term Evolution (LTE) Evolved UTRAN (E-UTRAN), LTE-Advanced (LTE-A), MulteFire, LTE-A Pro, and/or fifth generation (50) radio access technology or new radio (NR) access technology. 50 wireless systems refer to the next generation (NG) of radio systems and network architecture. A 50 system is mostly built on a 50 new radio (NR), but a 50 (or NG) network can also build on the E-UTRA radio. It is estimated that NR provides bitrates on the order of 10-20 Gbit/s or higher, and can support at least service categories such as enhanced mobile broadband (eMBB) and ultra-reliable low-latency-communication (URLLC) as well as massive machine type communication (mMTC). NR is expected to deliver extreme broadband and ultra-robust, low latency connectivity and massive networking to support the Internet of Things (IoT). With IoT and machine-to-machine (M2M) communication becoming more widespread, there will be a growing need for networks that meet the needs of lower power, low data rate, and long battery life. The next generation radio access network (NG-RAN) represents the RAN for 50, which can provide both NR and LTE (and LTE-Advanced) radio accesses. It is noted that, in 50, the nodes that can provide radio access functionality to a user equipment (i.e., similar to the Node B, NB, in UTRAN or the evolved NB, eNB, in LTE) may be named next-generation NB (gNB) when built on NR radio and may be named next- generation eNB (NG-eNB) when built on E-UTRA radio.

WO2016138957A1 discloses a method of transmitting and receiving transmission feedback in a radio network node involving a multi-level acknowledgement defining a decoding margin of a transport block.

SUMMARY:

The present invention relates to an apparatus as defined by the independent claim 1. Some further aspects are defined in the dependent claims.

BRIEF DESCRIPTION OF THE DRAWINGS:

For proper understanding of example embodiments, reference should be made to the accompanying drawings, wherein:

Fig. 1 illustrates an example of link adaptation;
Fig. 2 illustrates an example of error probability assisted link adaptation, according to an embodiment;
Fig. 3 illustrates an example signaling diagram depicting one example of error probability assisted link adaptation, according to an embodiment;
Fig. 4 illustrates an example flow diagram of error probability acknowledgement reporting that is based on cumulative error probability, according to an embodiment;
Fig. 5 illustrates a data flow example in which error probability for an upper layer packet (e.g., PDCP layer) can be formulated from reliabilities of lower layer packets, according to an embodiment;
Fig. 6a illustrates an example flow diagram of a method, according to an embodiment;
Fig. 6b illustrates an example flow diagram of a method, according to an embodiment;
Fig. 7a illustrates an example block diagram of an apparatus, according to an embodiment;
Fig. 7b illustrates an example block diagram of an apparatus, according to an embodiment;
Fig. 8 illustrates an example flow diagram of a method, according to an embodiment;
Fig. 9 illustrates an example signaling diagram, according to an embodiment; and
Fig. 10 illustrates an example flow diagram of a method, according to an embodiment.

DETAILED DESCRIPTION:

It will be readily understood that the components of certain example embodiments, as generally described and illustrated in the figures herein, may be arranged and designed in a wide variety of different configurations. Thus, the following detailed description of some example embodiments of systems, methods, apparatuses, and computer program products for link adaptation and/or obtaining channel state information (CSI), is not intended to limit the scope of certain embodiments but is representative of selected example embodiments.

The features, structures, or characteristics of example embodiments described throughout this specification may be combined in any suitable manner in one or more example embodiments. For example, the usage of the phrases "certain embodiments," "some embodiments," or other similar language, throughout this specification refers to the fact that a particular feature, structure, or characteristic described in connection with an embodiment may be included in at least one embodiment. Thus, appearances of the phrases "in certain embodiments," "in some embodiments," "in other embodiments," or other similar language, throughout this specification do not necessarily all refer to the same group of embodiments, and the described features, structures, or characteristics may be combined in any suitable manner in one or more example embodiments.

Additionally, if desired, the different functions or procedures discussed below may be performed in a different order and/or concurrently with each other. Furthermore, if desired, one or more of the described functions or procedures may be optional or may be combined. As such, the following description should be considered as illustrative of the principles and teachings of certain example embodiments, and not in limitation thereof.

Example embodiments described herein may relate to link adaptation and/or obtaining CSI. For example, some embodiments may include methods for protocol data unit (PDU) error probability (EP) assisted link adaptation (e.g., OLLA), modulation and coding scheme (MCS) selection, and/or adaptive coding and modulation (AMC) selection, as will be discussed in the following.

In current wireless systems, link adaptation may refer to the process of adjusting the modulation and coding scheme (MCS) per downlink transmission in accordance to each user's channel conditions. Link adaptation may typically be based on channel quality indicator (CQI) feedback information from the UE and outer loop for link adaptation (OLLA) may generally be applied on top to compensate for UE-specific CQI measurement errors, among other imperfections. For example, at a gNB, OLLA may adjust a signal-to-interference-plus-noise ratio (SINR)-offset which may be applied to the CQI reports from the UE. If gNB receives a HARQ-NACK from the UE, then a step-up may be applied to SINR offset, leading towards more robust MCS selection. If gNB receives a HARQ-ACK from the UE, then a step-down may be applied to SINR offset, leading towards more spectrally efficient MCS selection. As an example, the step-sizes and the target BLER can be shown to be optimal when step-down = step-up / (1/BLER$_{target}$ - 1). This is under the assumption of mobile broadband traffic where the overall goal is to maximize the network capacity. Correspondingly, the target BLER has typically been in the 1%-20% range.

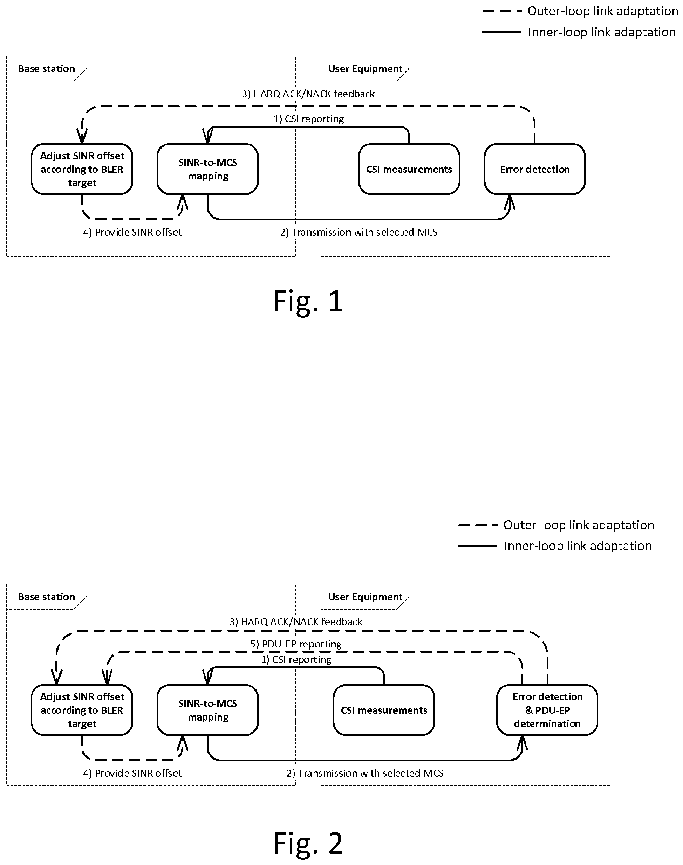

Link adaptation is an important feature in 4G-LTE and 5G-NR. A purpose of link adaptation includes optimizing spectral efficiency for varying channel conditions that UEs experience in cellular networks. Fig. 1 illustrates an example of link adaptation. As illustrated in the example of Fig. 1, at 1, inner-loop link adaptation may obtain a CSI report. Based on CSI reporting, a UE-experienced signal-to-interference-plus-noise ratio (SINR) estimate can be formulated for upcoming transmissions. At 2, a base station may map SINR estimate obtained from channel quality estimate (including in CSI report) to modulation and coding scheme (MCS), e.g., in order to select MCS. MCS may be used for transmitting data packets. As further shown in Fig. 1, at 3, the UE may report positive or negative hybrid automatic repeat request (HARQ) acknowledgement based on whether it was able to successfully decode a data packet or not. Based on HARQ ACK/NACK feedback, at 4, outer-loop link adaptation (OLLA) may adjust the SINR estimate offset for SINR-to-MCS mapping according to a desired block error rate (BLER) target.

It should be noted that channel quality indicator (CQI) table entries may be converted to SINR equivalent values for applying OLLA offset at the base station end. Hence, CSI/CQI-to-MCS mapping, as well as SINR-to-MCS mapping, can be used interchangeably to describe MCS selection at the base station end. The SINR offset (i.e., OLLA offset) may be subtracted from the estimated SINR before selecting the MCS. This is feasible since the CQI table may be designed to have constant SINR offset between the entries.

Conventionally, outer-loop link adaptation aims at controlling the user experienced average BLER for the first physical layer transmissions in order to adjust the HARQ operating point to a more optimal value in terms of spectral efficiency. Typically, a base station determines BLER target and SINR offset step-up values for outer-loop link adaptation. From those values, a step-down value for SINR offset may be given by:

$$\Delta_{down} = \frac{\Delta_{up}}{\frac{1}{BLER_T} - 1} \qquad (1)$$

where $\Delta_{down}$ is step-down value, $\Delta_{up}$ is step up value and *BLER$_T$* is target BLER. If ACK is received, then SINR$_{offset}$ = SINR$_{offset}$ - $\Delta_{down}$. If NACK is received, then SINR$_{offset}$ = SINR$_{offset}$ + $\Delta_{up}$. In an embodiment, MCS may be selected based on subtracting the SINR offset from the estimated SINR, e.g., as follows: SINR$_{estimation}$ = SINR$_{estimation}$ - SINR$_{offset}$.

Conventional link adaptation has been proven to be a successful way to achieve desired BLER target in numerous simulation studies as well as in real world cellular network implementations. Typically, a BLER target value for optimizing network spectral efficiency is approximately around 0.1.

One problem with inner-loop link adaptation is that CQI estimates obtained within CSI reporting may not be sufficiently accurate due to reporting delays and varying channel conditions. Therefore, outer-loop link adaptation (OLLA) may need to be used. However, conventional OLLA allows a certain percentage of transmissions to fail on purpose in order to optimize spectral efficiency. This is not desired behaviour, for example, for ultra-reliable low latency (URLLC) applications, whose reliability targets may range from 99.9% to 99.99999% or even above. Such reliability targets yield OLLA parameterization values that are inefficient for conventional OLLA. Furthermore, allowing errors to happen results in HARQ retransmissions becoming mandatory. However, with lowest URLLC latency requirements, such as 0.5 ms or 1 ms, there is time for none or at most one retransmission.

Additionally, BLER target considers only physical layer transmissions. Hence, even though a BLER target is met, it does not guarantee the same error rate target for higher layers due to larger higher layer (e.g., PDCP) packets being segmented for lower layer (e.g., physical layer) transmissions.

Another issue may relate to URLLC use cases where target BLER can be much below 1e-1 and OLLA may need to react as quickly as possible. This means that legacy OLLA, which is based on HARQ-ACK/NACK, is not feasible because of extremely long convergence times (can be minutes/hours/days until there's one NACK received).

Another problem related to URLLC use cases is that L1 BLER target is not a static parameter, but it can vary dynamically even between transmissions belonging to the same service flow. There are several examples as to why target BLER can be dynamic. For instance, assuming that BLERtarget=1e-5 and gNB needs to transmit packet #1, whose remaining latency budget allows only 1 transmission, then gNB should perform link adaptation (MCS selection) against BLERtarget=1e-5. Then gNB needs to transmit packet #2, whose remaining latency budget allows initial transmission + 2 retransmissions. In this case, gNB can optimize spectral efficiency and use higher BLERtarget in link adaptation, e.g., gNB can perform link adaptation using BLERtarget=2e-2 (since 0.02^3 < 1e-5) if it wants to assume that the 3 transmission opportunities are independent and have uncorrelated error probability. If HARQ combining gain is taken into account, then gNB could probably use BLERtarget=1e-1 for the initial transmission of packet #2. Furthermore, considering the QoS parameter survival time, the application layer can tolerate certain number of consecutive packet errors. With the requirement of survival time, in case the previous packet(s) is/are lost, the following packet(s) need to be received with higher reliability in order to fulfil the survival time requirement.

As mentioned above in connection with Fig. 1, according to normal OLLA, the OLLA offset is adjusted based on HARQ-ACK/NACK. Whereas for URLLC OLLA, the OLLA offset is adjusted based on error probability (EP) feedback from the UE. For example, the UE may return EP feedback of a received transport block to the gNB. The EP may be used in adjusting OLLA offset as follows: if EP > BLERtarget then OLLA offset is increased, or if EP ≤ BLERtarget then OLLA offset is decreased.

In addition, EP feedback can be performed in different ways including, for example, options with the content of UE feedback or options with the timing of reporting feedback. For the options with the content of UE feedback, generally the UE may return the estimated error probability (as a floating point number) or, more practically, it may be sufficient that the UE returns the exponent of the EP: round(-log10(EP)). If BLERtarget is (semi-)static, then it can be signaled to the UE by an RRC-message and 1-bit EP-ACK/NACK feedback from the UE is enough. It is noted that in a case with dynamic BLERtarget, gNB can include such BLERtarget information in the downlink control information (DCI) as one example. For the options with the timing of reporting feedback, the UE may provide EP-feedback at the same time with HARQ-ACK/NACK, and/or the UE may provide (averaged) EP-feedback at the same time with CSI-feedback. In alternative example embodiments, the UE can return higher layer PDU error-probability feedback, and/or the target error rate may be configured by gNB via RRC message.

Hence, certain example embodiments may be directed to providing OLLA-like spectral efficiency without "mandatory" erroneous transmissions. As a result, error probability and spectral efficiency can be optimized for URLLC applications with minimal control signalling overhead increase. Further, some embodiments may be directed to enhanced reported error probability based OLLA, for example, which can be used in URLLC use cases. As outlined above, URLLC OLLA includes an embodiment where the EP exponent feedback is provided together with HARQ-ACK/NACK. Some example embodiments may relate to a solution that can complement the URLLC OLLA approach with respect to the aspects that also work with dynamic BLERtarget (i.e., which work in the general case).

In order to eliminate the need for mandatory erroneous transmission in OLLA, some embodiments may include configuring a user device to determine error probabilities (EP) for successfully received transmissions. Fig. 2 illustrates an example of PDU-EP assisted OLLA, according to one embodiment. In an embodiment, as illustrated in the example of Fig. 2, at 5, the error probabilities may be signaled to a base station and used to aid OLLA without mandatory errors.

Currently, UEs measures SINR and map measure values to CQI that is reported to network with CSI reporting. Hence, a UE has a link to system mapping functionality that is able to provide decoding success probability for each MCS and SINR value, and this success (or error) probability can be used to steer OLLA.

According to the claimed invention, the feedback is further generalized so that it is based on higher protocol stack layers instead of just code block decoding success/failure. From the code block success probabilities, a UE is able to compose protocol data unit error probability (PDU-EP) for each upper layer. If a UE's physical layer receives k downlink data transmissions (during a certain time window), from which PDCP layer receives n PDCP data packets (during the same time window), then PDCP PDU-EP may be given by:

$$EP_{PDCP} = 1 - \sqrt[n]{(1 - EP_{L1})^k} \qquad (2)$$

where $EP_{L1}$ is mean error probability of k successfully received packets at physical layer. Such PDU-EP value may be reported to a base station as such; however, a more resource efficient reporting option may include to report just, e.g., a single PDCP PDU-EP acknowledgement bit that may be embedded into existing CSI reporting. If the obtained PDU-EP is over a certain threshold, then PDU-EP-NACK may be reported. If the obtained PDU-EP is below the threshold, then PDU-EP-ACK may be reported. These reports can be, for example, embedded to CSI reports.

According to certain embodiments, with PDU-EP acknowledgements, outer-loop link adaptation is able to perform OLLA offset step-ups before errors occur. Therefore, OLLA according to example embodiments can reach similar physical resource efficiency as current outer-loop link adaptation, with reliability that can meet URLLC requirements without retransmission. When the reduced need for retransmissions and packet duplications are considered, it is expected that PDU-EP based OLLA provided by certain embodiments can outperform current OLLA in both reliability and spectral efficiency with minimal added signalling overhead.

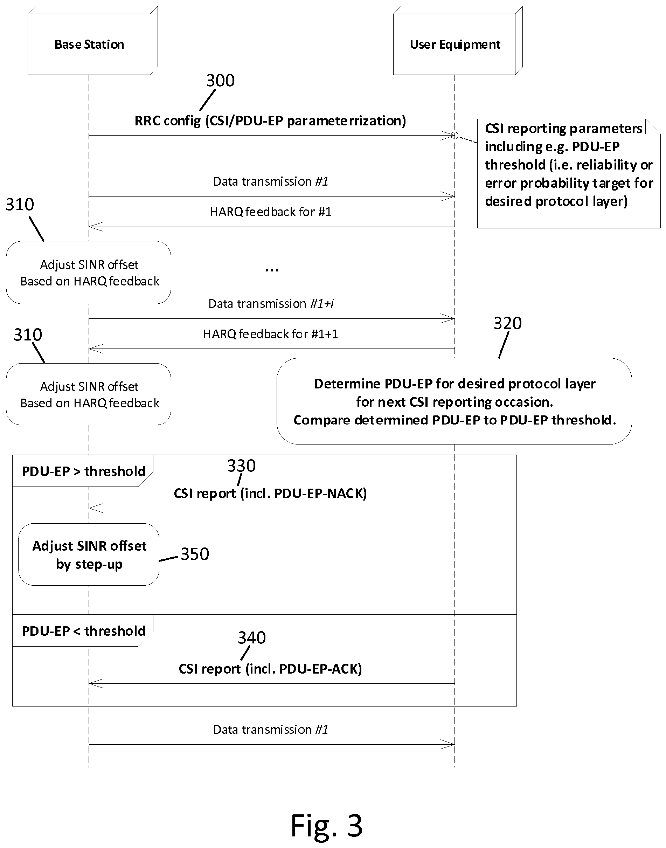

Fig. 3 illustrates an example of a signaling diagram depicting error probability assisted link adaptation (e.g., PDU-EP assisted OLLA), according to an embodiment. As will be discussed in more detail in connection with Fig. 3, certain embodiments may include at least one of PDU-EP parametrization, determining PDU-EP over certain time window, embedding PDU-EP acknowledgement to CSI reporting and/or adjusting SINR offset for MCS selection based on PDU-EP.

As illustrated in the example of Fig. 3, at 300, a UE may receive parameterization for CSI/PDU-EP reporting. In an embodiment, the parameterization may include periodicity of reporting, protocol layer for which PDU-EP reporting is desired, and/or PDU-EP threshold. The PDU-EP threshold may be reliability or error probability threshold, which may trigger negative PDU-EP acknowledgement. According to one embodiment, PDU-EP threshold may relate to a certain layer PDU's error/success probability (e.g., PDCP PDU).

In certain embodiments, the UE may report PDU-EP for successfully received signals and, at 310, OLLA may use this information as input for adjusting the OLLA offset. In cases when the code block decoding fails, there will be HARQ NACK sent and OLLA may use HARQ NACKs for immediate offset adjustment (step-up may be applied). Once PDU-EP is to be reported (e.g., embedded to CSI reporting), at 320, the UE may determine PDU-EP for desired protocol layer.

According to some embodiments, the PDU-EP can be determined, for example, with following procedures. First, the UE may obtain error probability for each layer 1 (L1) transmission received during CSI reporting interval with the UE's existing link to system mapping that can be used for mapping measured SINR/SNR and used MCS to transmission error probability. The UE may then calculate mean L1 error probability of CSI reporting interval from obtained error probabilities, and determine PDU-EP, for example, according to Equation (2), e.g., for PDCP packets.

In an embodiment, the PDU-EP may be reported as a numerical value or, to reduce added signalling overhead, just a PDU-EP acknowledgement bit may be reported. In certain embodiments, as illustrated in Fig. 3 at 330, when PDU-EP > configured threshold, then PDU-EP-NACK may be reported. However, if PDU-EP < configured threshold, then PDU-EP-ACK may be reported at 340.

In some embodiments, when the base station notices (e.g., based on reported PDU-EP value or PDU-EP acknowledgement) that PDU error probability is above desired threshold, at 350, the base station may adjust its SINR-to-MCS (or CQI-to-MCS) mapping OLLA offset used in link adaptation for that particular UE or service flow. According to certain embodiments, there are several example alternatives for how OLLA offset can be adjusted when PDU-EP is over/below certain threshold. For example, in an embodiment, the network may perform additional step-up(s) for OLLA offset (similarly as with HARQ NACK). This approach may result in more robust MCS selections and can avoid majority of unsuccessful transmissions. Additionally or alternatively, in an embodiment, if PDU-EP is over a certain threshold (i.e., negative PDU-EP acknowledgement is reported) the network may, for example, discontinue step-downs for OLLA offset until PDU-EP meets or is below the certain threshold (i.e., positive PDU-EP acknowledgement is reported).

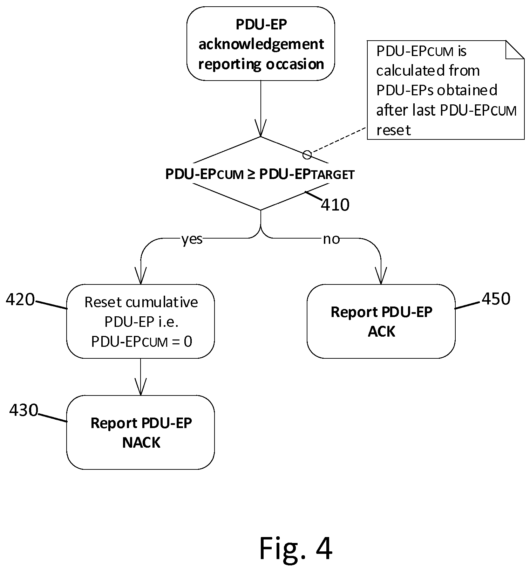

If it is desired that PDU error rate settles close to desired error rate, then cumulative PDU-EP, which is reset every time HARQ NACK and/or PDU-EP NACK is reported, may be utilized as illustrated in the example flow diagram of Fig. 4. Such cumulative PDU-EP for desired protocol stack layer may be calculated for J subsequent PDU-EP values received for considered protocol layer, for example, as follows:

$$EP_{cum} = 1 - \sqrt[J]{\prod_{j=1}^{J}(1 - EP_j)}, \qquad (3)$$

where $EP_j$ denotes $j$th subsequent PDU-EP obtained after last $EP_{cum}$ reset. As illustrated in the example of Fig. 4, at 410, once cumulative error probability $EP_{cum}$ reaches desired target, i.e., $EP_{cum} \geq EP\_target$, then PDU-EP NACK can be reported, at 430, and, at 420, $EP_{cum}$ may be reset by setting $EP_{cum} = 0$. Otherwise, at 450, PDU-EP ACK may be reported. It should be noted that, according to one example, in addition to negative PDU-EP acknowledgement, cumulative PDU-EP may also be reset due to negative HARQ acknowledgement.

It is further noted that a UE may be configured to also report L1 PDU-EP. Then, in Equation (2), $n = k$. If higher layer PDU-EP is used, then usually k > n in typical URLLC scenarios where periodically transmitted packets are being segmented for physical layer transmissions. Of course, k < n when multiple small packets are concatenated together, e.g., when two or more small packets become available for transmission at the same time.

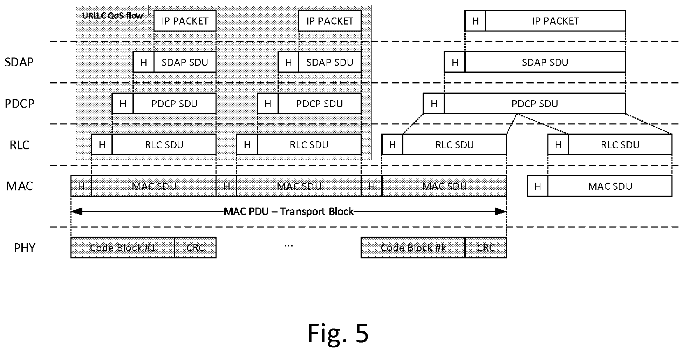

According to an embodiment, if the network desires upper layer PDU-EP value or PDU-EP acknowledgement only for a certain QoS flow (e.g., due to service flow specific error rate targets), then the network may indicate, e.g., in RRC configuration which data radio bearer(s) (DRB) or RLC channels should be considered. In such a scenario, the receiver should be able to track how many physical layer transmissions took place and what were their error probabilities at upper layers, as illustrated in the example of Fig. 5. Hence, for each received PDU provided to upper layer, lower layer may pass PDU-EP information and, for instance, PDU-EP for upper layer(s) may be calculated according to Equation (2) and cumulative PDU-EP for upper layer(s) may be calculated according to Equation (3). For example, MAC PDU-EPs can be derived from the transport block's code block (or code block group (CBG)) reliabilities. RLC PDU-EPs can be derived from MAC PDU-EPs and/or PDCP PDU-EPs can be derived from RLC PDU-EPs, etc. Then, for example, PDCP layer may be capable of providing averaged PDU-EP over a certain time period for desired QoS flow that is mapped to DRB or RLC channel.

In another embodiment, SINR difference may be determined rather than PDU-EP. For example, instead of determining PDU-EPs, a UE may determine optimal SINR values for given one or more allocations during a certain time period. In some embodiments, this may be performed by performing existing SINR-to-CQI mapping the other way around. Such optimal SINR values may be compared to SINR measured during the actual transmission. This yields SINR offset at the UE end, which can be compared against a certain "safety offset". The additional information (i.e., PDU-EP as well as SINR offset at UE end) may indicate how close to probably erroneous transmission OLLA has tuned its offset for MCS selection. For instance, if a UE notices that $SINR_{optimal} > SINR_{measured} - SINR_{safety\ offset}$ (i.e., SINR is most probably becoming over estimated due to OLLA step-down), then PDU-EP NACK may be reported, e.g., together with a CSI report.

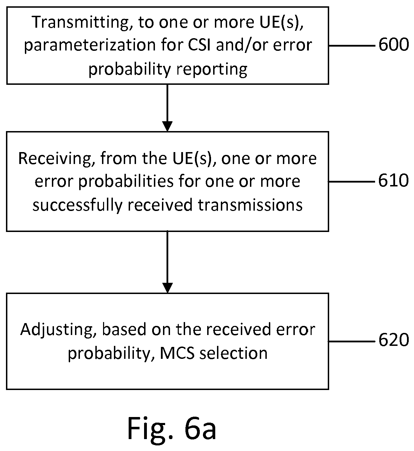

Fig. 6a illustrates an example flow diagram of a method of error probability assisted link adaptation, MCS selection, and/or AMC selection, according to one example embodiment. In certain example embodiments, the flow diagram of Fig. 6a may be performed by a network entity or network node associated with a communication system, such as LTE or 5G NR. For instance, in some example embodiments, the network node performing the method of Fig. 6a may include a base station, eNB, gNB, and/or NG-RAN node.

As illustrated in the example of Fig. 6a, the method may include, at 600, transmitting, to one or more UE(s), parameterization for CSI and/or error probability reporting, e.g., in a RRC configuration message. In one example, the error probability may include PDU-EP and/or may be for one or more desired protocol layers. According to certain embodiments, the parameterization may include periodicity of reporting, one or more protocol layers for which PDU-EP reporting is desired, and/or a PDU-EP threshold. In an embodiment, the PDU-EP threshold may be a reliability or error probability threshold, e.g., which may or may not trigger negative PDU-EP acknowledgement.

According to certain embodiments, if upper layer PDU-EP value or PDU-EP acknowledgement is desired only for a certain QoS flow (e.g., due to service flow specific error rate targets), then the transmitting 600 may include indicating, e.g., in a RRC configuration, which DRB(s) or RLC channel(s) should be considered.

In some embodiments, the method of Fig. 6a may also include, at 610, receiving, from the UE(s), one or more error probabilities (e.g., PDU-EP) for one or more successfully received transmissions. According to an embodiment, the receiving 610 may include receiving the error probability as part of CSI reporting from the UE(s). For instance, in an embodiment, the receiving 610 may include receiving the error probability as a single PDCP PDU-EP acknowledgement bit that may be embedded into CSI reporting. In certain embodiments, when the error probability is above a certain threshold, the receiving 610 may include receiving a negative acknowledgement (e.g., PDU-EP NACK). However, when the error probability is below a certain threshold, the receiving 610 may include receiving a positive acknowledgement (e.g., PDU-EP ACK).

According to an embodiment, the method of Fig. 6a may further include, at 620, adjusting, based on the received error probability, the MCS selection. In one embodiment, the adjusting 620 may include adjusting, based on the received error probability, the OLLA offset used in OLLA for the UE(s), service flow(s), and/or one or more transmissions, e.g., even when no transmission errors occur. For example, in an embodiment, the adjusting 620 may include adjusting the SINR-to-MCS or CQI-to-MCS mapping.

In certain embodiments, the adjusting 620 may include performing additional step-up(s) for the OLLA offset. This may result in more robust MCS selections and can avoid the majority of unsuccessful transmissions. Additionally or alternatively, if PDU-EP is over a certain threshold (e.g., negative PDU-EP acknowledgement is received), then the adjusting 620 may include discontinuing step-downs for the OLLA offset until PDU-EP meets or is below the certain threshold (e.g., positive PDU-EP acknowledgement is received).

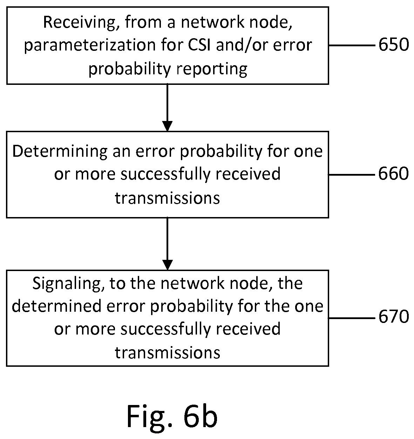

Fig. 6b illustrates an example flow diagram of a method for error probability assisted link adaptation, MCS selection, and/or AMC selection, according to one example embodiment. In certain example embodiments, the flow diagram of Fig. 6b may be performed by a network entity or network node associated with a communications system, such as LTE or 5G NR. For instance, in some example embodiments, the network entity performing the method of Fig. 6b may be a UE, mobile station, IoT device, or the like.

In an embodiment, the method of Fig. 6b may include, at 650, receiving, from a network node, parameterization for CSI and/or error probability reporting, e.g., in a RRC configuration message. In one example, the error probability may include PDU-EP and/or may be for one or more desired protocol layers. According to certain embodiments, the parameterization may include periodicity of reporting, one or more protocol layers for which PDU-EP reporting is desired, and/or a PDU-EP threshold. In an embodiment, the PDU-EP threshold may be reliability or error probability threshold, which may trigger PDU-EP NACK.

According to certain embodiments, if upper layer PDU-EP value or PDU-EP acknowledgement is desired only for a certain QoS flow (e.g., due to service flow specific error rate targets), then the receiving 650 may include receiving, e.g., in a RRC configuration, which DRB(s), RLC channel(s), and/or target error rate ranges should be considered.

In an embodiment, the method of Fig. 6b may include, at 660, determining an error probability for one or more successfully received transmissions. According to some embodiments, the determining 660 may include measuring SINR and comparing the measured SINR to a given allocation, such as MCS, CQI and/or RBs. For example, in certain embodiments, the determining 660 may include determining PDU-EP for one or more desired protocol layers. According to some embodiments, the PDU-EP may be determined by obtaining error probability for one or more L1 transmissions received during CSI reporting interval with a link to system mapping that can be used for mapping measured SINR/SNR and used MCS to transmission error probability, by calculating mean L1 error probability of CSI reporting interval from obtained error probabilities, and determining PDU-EP, for example, according to Equation (2) discussed above, e.g., for PDCP packets.

In some embodiments, the method of Fig. 6b may also include, at 670, signaling, to the network node, the determined error probability (e.g., PDU-EP) for the one or more successfully received transmissions. According to one embodiment, the error probability may be utilized to control MCS selection and/or to control OLLA even when no transmission errors occur. In an embodiment, the signaling 670 may include reporting the error probability as part of CSI reporting from the UE(s). For instance, in an embodiment, the signaling 670 may include reporting the error probability as a single transmission error probability-based acknowledgement bit that may be embedded into CSI reporting. In certain embodiments, when the error probability is above a certain threshold, the signaling 670 may include transmitting a negative acknowledgement (e.g., PDU-EP NACK). However, when the error probability is below a certain threshold, the signaling 670 may include transmitting a positive acknowledgement (e.g., PDU-EP ACK). In certain embodiments, the signaling 670 may also include signaling L1 PDU-EP.

According to some embodiments, if it is desired that PDU error rate settles close to desired error rate, then a cumulative PDU-EP, which is reset every time HARQ NACK and/or PDU-EP NACK is reported, may be utilized. In an embodiment, the cumulative PDU-EP for desired protocol stack layer may be calculated for $J$ subsequent PDU-EP values received for considered protocol layer for example according to Equation (3) discussed above. In some examples, when the cumulative error probability reaches a desired target, then PDU-EP NACK can be reported and the cumulative error probability may be reset to 0.

As mentioned above, according to certain embodiments, if the network node desires upper layer PDU-EP value or PDU-EP acknowledgement only for a certain QoS flow, then the receiving 650 may include receiving an indication of which DRB(s) or RLC channel(s) should be considered. In this case, the method may include tracking how many physical layer transmissions took place and their error probabilities at upper layers, as depicted in Fig. 5 discussed above. As such, for each received PDU provided to upper layer, lower layer may pass PDU-EP information. For example, in this embodiment, the determining 660 may include deriving MAC PDU-EPs from transport block's code block or CBG reliabilities, or deriving RLC PDU-EPs from MAC-PDU-EPs. Then, for example, a PDCP layer is capable of providing averaged PDU-EP over a certain time period for desired QoS flow that is mapped to DRB or RLC channel.

In another embodiment, the determining 660 may include determining PDU-EPs by determining optimal SINR values for given one or more allocations during a certain time period. This may be done by performing existing SINR-to-CQI mapping the other way around. Then, such optimal SINR values may be compared to SINR measured during the actual transmission, which yields SINR offset at the UE end that can be compared against a certain "safety offset." This additional information (i.e., PDU-EP as well as SINR offset at UE end) can indicate how close to a probably erroneous transmission the OLLA has tuned its offset for MCS selection. For example, if it is determined that $SINR_{optimal} > SINR_{measured} - SINR_{safety offset}$ (i.e., SINR is most probably becoming over estimated due to OLLA step-down), then the signaling 670 may include reporting PDU-EP NACK, e.g., together with CSI report.

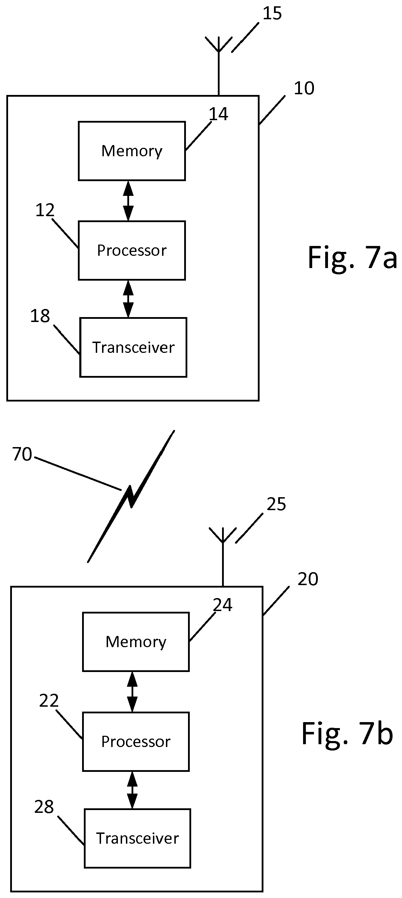

Fig. 7a illustrates an example of an apparatus 10 according to an embodiment. In an embodiment, apparatus 10 may be a node, host, or server in a communications network or serving such a network. For example, apparatus 10 may be a satellite, base station, a Node B, an evolved Node B (eNB), 5G Node B or access point, next generation Node B (NG-NB or gNB), and/or WLAN access point, associated with a radio access network, such as a LTE network, 5G or NR. In example embodiments, apparatus 10 may be or may include a NG-RAN node, an eNB in LTE, or gNB in 5G.

It should be understood that, in some example embodiments, apparatus 10 may be comprised of an edge cloud server as a distributed computing system where the server and the radio node may be stand-alone apparatuses communicating with each other via a radio path or via a wired connection, or where they may be located in a same entity communicating via a wired connection. For instance, in certain example embodiments where apparatus 10 represents a gNB, it may be configured in a central unit (CU) and distributed unit (DU) architecture that divides the gNB functionality. In such an architecture, the CU may be a logical node that includes gNB functions such as transfer of user data, mobility control, radio access network sharing, positioning, and/or session management, etc. The CU may control the operation of DU(s) over a front-haul interface. The DU may be a logical node that includes a subset of the gNB functions, depending on the functional split option. It should be noted that one of ordinary skill in the art would understand that apparatus 10 may include components or features not shown in Fig. 7a.

As illustrated in the example of Fig. 7a, apparatus 10 may include a processor 12 for processing information and executing instructions or operations. Processor 12 may be any type of general or specific purpose processor. In fact, processor 12 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 12 is shown in Fig. 7a, multiple processors may be utilized according to other example embodiments. For example, it should be understood that, in certain embodiments, apparatus 10 may include two or more processors that may form a multiprocessor system (e.g., in this case processor 12 may represent a multiprocessor) that may support multiprocessing. In some embodiments, the multiprocessor system may be tightly coupled or loosely coupled (e.g., to form a computer cluster).

Processor 12 may perform functions associated with the operation of apparatus 10, which may include, for example, precoding of antenna gain/phase parameters, encoding and decoding of individual bits forming a communication message, formatting of information, and overall control of the apparatus 10, including processes related to management of communication resources.

Apparatus 10 may further include or be coupled to a memory 14 (internal or external), which may be coupled to processor 12, for storing information and instructions that may be executed by processor 12. Memory 14 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 14 can be comprised of any combination of random access memory (RAM), read only memory (ROM), static storage such as a magnetic or optical disk, hard disk drive (HDD), or any other type of non-transitory machine or computer readable media. The instructions stored in memory 14 may include program instructions or computer program code that, when executed by processor 12, enable the apparatus 10 to perform tasks as described herein.

In an embodiment, apparatus 10 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 12 and/or apparatus 10.

In some embodiments, apparatus 10 may also include or be coupled to one or more antennas 15 for transmitting and receiving signals and/or data to and from apparatus 10. Apparatus 10 may further include or be coupled to a transceiver 18 configured to transmit and receive information. The transceiver 18 may include, for example, a plurality of radio interfaces that may be coupled to the antenna(s) 15. In certain embodiments, the radio interfaces may correspond to a plurality of radio access technologies including one or more of GSM, NB-IoT, LTE, 5G, WLAN, Bluetooth, BT-LE, NFC, radio frequency identifier (RFID), ultrawideband (UWB), MulteFire, and/or the like. According to an example embodiment, the radio interface may include components, such as filters, converters (for example, digital-to-analog converters and the like), mappers, a Fast Fourier Transform (FFT) module, and/or the like, e.g., to generate symbols for transmission via one or more downlinks and to receive symbols (for example, via an uplink).

As such, transceiver 18 may be configured to modulate information on to a carrier waveform for transmission by the antenna(s) 15 and demodulate information received via the antenna(s) 15 for further processing by other elements of apparatus 10. In other example embodiments, transceiver 18 may be capable of transmitting and receiving signals or data directly. Additionally or alternatively, in some embodiments, apparatus 10 may include an input and/or output device (I/O device).

In an embodiment, memory 14 may store software modules that provide functionality when executed by processor 12. The modules may include, for example, an operating system that provides operating system functionality for apparatus 10. The memory may also store one or more functional modules, such as an application or program, to provide additional functionality for apparatus 10. The components of apparatus 10 may be implemented in hardware, or as any suitable combination of hardware and software.

According to some embodiments, processor 12 and memory 14 may be included in or may form a part of processing circuitry or control circuitry. In addition, in some embodiments, transceiver 18 may be included in or may form a part of transceiver circuitry.

As used herein, the term "circuitry" may refer to hardware-only circuitry implementations (e.g., analog and/or digital circuitry), combinations of hardware circuits and software, combinations of analog and/or digital hardware circuits with software/firmware, any portions of hardware processor(s) with software (including digital signal processors) that work together to case an apparatus (e.g., apparatus 10) to perform various functions, and/or hardware circuit(s) and/or processor(s), or portions thereof, that use software for operation but where the software may not be present when it is not needed for operation. As a further example, as used herein, the term "circuitry" may also cover an implementation of merely a hardware circuit or processor (or multiple processors), or portion of a hardware circuit or processor, and its accompanying software and/or firmware. The term circuitry may also cover, for example, a baseband integrated circuit in a server, cellular network node or device, or other computing or network device.

As introduced above, in certain embodiments, apparatus 10 may be a network node or RAN node, such as a base station, access point, Node B, eNB, gNB, WLAN access point, or the like. For example, in some embodiments, apparatus 10 may be configured to perform one or more of the processes depicted in any of the flow charts or signaling diagrams described herein, such as those illustrated in Fig. 1, Fig. 2, Fig. 3, Fig. 4, Fig. 6a, Fig. 6b, Fig. 8, Fig. 9, and/or Fig. 10. In some embodiments, as discussed herein, apparatus 10 may be configured to perform a procedure relating to error probability assisted link adaptation, MCS selection, and/or AMC selection.

According to certain embodiments, apparatus 10 may be controlled by memory 14 and processor 12 to transmit, to one or more UE(s), parameterization for CSI and/or error probability reporting, e.g., in a RRC configuration message. In one example, the error probability may include PDU-EP and/or may be for one or more desired protocol layers. According to certain embodiments, the parameterization may include periodicity of reporting, one or more protocol layers for which PDU-EP reporting is desired, and/or a PDU-EP threshold. In an embodiment, the PDU-EP threshold may be a reliability or error probability threshold, e.g., which may or may not trigger negative PDU-EP acknowledgement.

According to certain embodiments, if upper layer PDU-EP value or PDU-EP acknowledgement is desired only for a certain QoS flow (e.g., due to service flow specific error rate targets), then apparatus 10 may be controlled by memory 14 and processor 12 to indicate, for example in a RRC configuration, which DRB(s) or RLC channel(s) should be considered.

In some embodiments, apparatus 10 may be controlled by memory 14 and processor 12 to receive, from the UE(s), one or more error probabilities (e.g., PDU-EP) for one or more successfully received transmissions. According to an embodiment, apparatus 10 may be controlled by memory 14 and processor 12 to receive the error probability as part of CSI reporting from the UE(s). For instance, in an embodiment, apparatus 10 may be controlled by memory 14 and processor 12 to receive the error probability as a single PDCP PDU-EP acknowledgement bit that may be embedded into CSI reporting. In certain embodiments, when the error probability is above a certain threshold, apparatus 10 may be controlled by memory 14 and processor 12 to receive PDU-EP NACK. However, when the error probability is below a certain threshold, apparatus 10 may be controlled by memory 14 and processor 12 to receive PDU-EP ACK.

According to an embodiment, apparatus 10 may be controlled by memory 14 and processor 12 to adjust, based on the received error probability, the MCS selection. In one embodiment, apparatus 10 may be controlled by memory 14 and processor 12 to adjust, based on the received error probability, the OLLA offset used in OLLA for the UE(s), service flow(s), and/or one or more transmissions, e.g., even when no transmission errors occur. For example, in an embodiment, then apparatus 10 may be controlled by memory 14 and processor 12 to adjust the SINR-to-MCS or CQI-to-MCS mapping.

In certain embodiments, apparatus 10 may be controlled by memory 14 and processor 12 to perform additional step-up(s) for OLLA offset. These additional step-up(s) may result in more robust MCS selections and can avoid the majority of unsuccessful transmissions. Additionally or alternatively, if PDU-EP is over a certain threshold (e.g., PDU-EP NACK is received), then apparatus 10 may be controlled by memory 14 and processor 12 to discontinue step-downs for OLLA offset until PDU-EP meets or is below the certain threshold (e.g., PDU-EP ACK is received).

Fig. 7b illustrates an example of an apparatus 20 according to another embodiment. In an embodiment, apparatus 20 may be a node or element in a communications network or associated with such a network, such as a UE, mobile equipment (ME), mobile station, mobile device, stationary device, IoT device, or other device. As described herein, UE may alternatively be referred to as, for example, a mobile station, mobile equipment, mobile unit, mobile device, user device, subscriber station, wireless terminal, tablet, smart phone, IoT device, sensor or NB-IoT device, or the like. As one example, apparatus 20 may be implemented in, for instance, a wireless handheld device, a wireless plug-in accessory, or the like.

In some example embodiments, apparatus 20 may include one or more processors, one or more computer-readable storage medium (for example, memory, storage, or the like), one or more radio access components (for example, a modem, a transceiver, or the like), and/or a user interface. In some embodiments, apparatus 20 may be configured to operate using one or more radio access technologies, such as GSM, LTE, LTE-A, NR, 5G, WLAN, WiFi, NB-IoT, Bluetooth, NFC, MulteFire, and/or any other radio access technologies. It should be noted that one of ordinary skill in the art would understand that apparatus 20 may include components or features not shown in Fig. 7b.

As illustrated in the example of Fig. 7b, apparatus 20 may include or be coupled to a processor 22 for processing information and executing instructions or operations. Processor 22 may be any type of general or specific purpose processor. In fact, processor 22 may include one or more of general-purpose computers, special purpose computers, microprocessors, digital signal processors (DSPs), field-programmable gate arrays (FPGAs), application-specific integrated circuits (ASICs), and processors based on a multi-core processor architecture, as examples. While a single processor 22 is shown in Fig. 7b, multiple processors may be utilized according to other example embodiments. For example, it should be understood that, in certain embodiments, apparatus 20 may include two or more processors that may form a multiprocessor system (e.g., in this case processor 22 may represent a multiprocessor) that may support multiprocessing. In some embodiments, the multiprocessor system may be tightly coupled or loosely coupled (e.g., to form a computer cluster).

Processor 22 may perform functions associated with the operation of apparatus 20 including, as some non-limiting examples, precoding of antenna gain/phase parameters, encoding and decoding of individual bits forming a communication message, formatting of information, and overall control of the apparatus 20, including processes related to management of communication resources.

Apparatus 20 may further include or be coupled to a memory 24 (internal or external), which may be coupled to processor 22, for storing information and instructions that may be executed by processor 22. Memory 24 may be one or more memories and of any type suitable to the local application environment, and may be implemented using any suitable volatile or nonvolatile data storage technology such as a semiconductor-based memory device, a magnetic memory device and system, an optical memory device and system, fixed memory, and/or removable memory. For example, memory 24 can be comprised of any combination of random access memory (RAM), read only memory (ROM), static storage such as a magnetic or optical disk, hard disk drive (HDD), or any other type of non-transitory machine or computer readable media. The instructions stored in memory 24 may include program instructions or computer program code that, when executed by processor 22, enable the apparatus 20 to perform tasks as described herein.

In an embodiment, apparatus 20 may further include or be coupled to (internal or external) a drive or port that is configured to accept and read an external computer readable storage medium, such as an optical disc, USB drive, flash drive, or any other storage medium. For example, the external computer readable storage medium may store a computer program or software for execution by processor 22 and/or apparatus 20.

In some embodiments, apparatus 20 may also include or be coupled to one or more antennas 25 for receiving a downlink signal and/or for transmitting via an uplink from apparatus 20. According to certain embodiments, apparatus 20 may further include a transceiver 28 configured to transmit and receive information. In one example, the transceiver 28 may also include a radio interface (e.g., a modem) coupled to the antenna 25. In some embodiments, the radio interface may correspond to a plurality of radio access technologies including one or more of GSM, LTE, LTE-A, 5G, NR, WLAN, NB-IoT, Bluetooth, BT-LE, NFC, RFID, UWB, and the like. In further example embodiments, the radio interface may include other components, such as filters, converters (for example, digital-to-analog converters and the like), symbol demappers, signal shaping components, an Inverse Fast Fourier Transform (IFFT) module, and the like, to process symbols, such as OFDMA symbols, carried by a downlink or an uplink.

For instance, transceiver 28 may be configured to modulate information on to a carrier waveform for transmission by the antenna(s) 25 and demodulate information received via the antenna(s) 25 for further processing by other elements of apparatus 20. In other example embodiments, transceiver 28 may be capable of transmitting and receiving signals or data directly. Additionally or alternatively, in some embodiments, apparatus 20 may include an input and/or output device (I/O device). In certain embodiments, apparatus 20 may further include a user interface, such as a graphical user interface or touchscreen.

In an embodiment, memory 24 stores software modules that provide functionality when executed by processor 22. The modules may include, for example, an operating system that provides operating system functionality for apparatus 20. The memory may also store one or more functional modules, such as an application or program, to provide additional functionality for apparatus 20. The components of apparatus 20 may be implemented in hardware, or as any suitable combination of hardware and software. According to an example embodiment, apparatus 20 may optionally be configured to communicate with apparatus 10 via a wireless or wired communications link 70 according to any radio access technology, such as NR.

According to some embodiments, processor 22 and/or memory 24 may be included in or may form a part of processing circuitry or control circuitry. In addition, in some embodiments, transceiver 28 may be included in or may form a part of transceiving circuitry.

As discussed above, according to some embodiments, apparatus 20 may be a UE, mobile device, mobile station, ME, IoT device and/or NB-IoT device, for example. According to certain embodiments, apparatus 20 may be controlled by memory 24 and processor 22 to perform the functions associated with example embodiments described herein. For example, in some embodiments, apparatus 20 may be configured to perform one or more of the processes depicted in any of the flow charts or signaling diagrams described herein, such as those illustrated in Fig. 1, Fig. 2, Fig. 3, Fig. 4, Fig. 6a, Fig. 6b, Fig. 8, Fig. 9, and/or Fig. 10. In certain embodiments, apparatus 20 may include or represent a UE and may be configured to perform a procedure relating to error probability assisted link adaptation, MCS selection, and/or AMC selection, for instance.

In certain embodiments, apparatus 20 may be controlled by memory 24 and processor 22 to receive, from a network node, parameterization for CSI and/or error probability reporting, for example in a RRC configuration message. In one example, the error probability may include PDU-EP and/or may be for one or more desired protocol layers. According to certain embodiments, the parameterization may include periodicity of reporting, one or more protocol layers for which PDU-EP reporting is desired, and/or a PDU-EP threshold. In an embodiment, the PDU-EP threshold may be reliability or error probability threshold, which may trigger PDU-EP NACK.

According to certain embodiments, if upper layer PDU-EP value or PDU-EP acknowledgement is desired only for a certain QoS flow (e.g., due to service flow specific error rate targets), then apparatus 20 may be controlled by memory 24 and processor 22 to receive, for example in a RRC configuration, which DRB(s), RLC channel(s) and/or target error rate ranges should be considered.

In an embodiment, apparatus 20 may be controlled by memory 24 and processor 22 to determine an error probability for one or more successfully received transmissions. According to some embodiments, apparatus 20 may be controlled by memory 24 and processor 22 to determine the error probability by measuring SINR and comparing the measured SINR to a given allocation, such as MCS, CQI and/or RBs. For example, in certain embodiments, apparatus 20 may be controlled by memory 24 and processor 22 to determine PDU-EP for one or more desired protocol layers. According to some embodiments, the PDU-EP may be determined by obtaining error probability for one or more L1 transmissions received during CSI reporting interval with a link to system mapping that can be used for mapping measured SINR/SNR and used MCS to transmission error probability, by calculating mean L1 error probability of CSI reporting interval from obtained error probabilities, and determining PDU-EP, for example, according to Equation (2) discussed above, e.g., for PDCP packets.

In some embodiments, apparatus 20 may be controlled by memory 24 and processor 22 to signal, to the network node, the determined error probability (e.g., PDU-EP) for the one or more successfully received transmissions. According to one embodiment, the error probability may be utilized to control MCS selection and/or to control OLLA even when no transmission errors occur. In an embodiment, apparatus 20 may be controlled by memory 24 and processor 22 to report the error probability as part of CSI reporting from the UE(s). For instance, in an embodiment, apparatus 20 may be controlled by memory 24 and processor 22 to report the error probability as a single transmission error probability-based acknowledgement bit that may be embedded into CSI reporting. In certain embodiments, when the error probability is above a certain threshold, apparatus 20 may be controlled by memory 24 and processor 22 to transmit PDU-EP NACK. However, when the error probability is below a certain threshold, apparatus 20 may be controlled by memory 24 and processor 22 to transmit PDU-EP ACK. In certain embodiments, apparatus 20 may be controlled by memory 24 and processor 22 to signal L1 PDU-EP.

According to some embodiments, if it is desired that PDU error rate settles close to desired error rate, then apparatus 20 may be controlled by memory 24 and processor 22 to report a cumulative PDU-EP, which is reset every time HARQ NACK and/or PDU-EP NACK is reported. In an embodiment, apparatus 20 may be controlled by memory 24 and processor 22 to calculate the cumulative PDU-EP for desired protocol stack layer for J subsequent PDU-EP values received for considered protocol layer for example according to Equation (3) discussed above. In some examples, when the cumulative error probability reaches a desired target, then apparatus 20 may be controlled by memory 24 and processor 22 to report PDU-EP NACK and to reset the cumulative error probability may be to 0.

As mentioned above, according to certain embodiments, if the network node desires upper layer PDU-EP value or PDU-EP acknowledgement only for a certain QoS flow, then apparatus 20 may be controlled by memory 24 and processor 22 to receive an indication of which DRB(s) or RLC channel(s) should be considered. In this case, apparatus 20 may be controlled by memory 24 and processor 22 to track how many physical layer transmissions took place and their error probabilities at upper layers, as depicted in Fig. 5 discussed above. As such, for each received PDU provided to upper layer, a lower layer may pass PDU-EP information. For example, in this embodiment, apparatus 20 may be controlled by memory 24 and processor 22 to derive MAC PDU-EPs from transport block's code block or CBG reliabilities, or to derive RLC PDU-EPs from MAC-PDU-EPs. Then, for example, a PDCP layer is capable of providing averaged PDU-EP over a certain time period for desired QoS flow that is mapped to DRB or RLC channel.

In another embodiment, apparatus 20 may be controlled by memory 24 and processor 22 to determine PDU-EPs by determining optimal SINR values for given one or more allocations during a certain time period. This may be done by performing existing SINR-to-CQI mapping the other way around. Then, such optimal SINR values may be compared to SINR measured during the actual transmission, which yields SINR offset at the apparatus 20 that can be compared against a certain "safety offset." This additional information (i.e., PDU-EP as well as SINR offset at UE end) can indicate how close to a probably erroneous transmission the OLLA has tuned its offset for MCS selection. For example, if it is determined that $SINR_{optimal} > SINR_{measured} - SINR_{safety\ offset}$ (i.e., SINR is likely becoming over estimated due to OLLA step-down), then apparatus 20 may be controlled by memory 24 and processor 22 to report PDU-EP NACK, e.g., together with CSI report.

As outlined in the foregoing, the information that is needed for accurate link adaptation decision may be arranged to the gNB side. According to certain example embodiments, the necessary information can be arranged to the UE side. Therefore, in some embodiments, a gNB may configure a UE to report EP-ACK/NACK on top of regular HARQ-ACK/NACK. In an embodiment, the gNB may add target BLER information, "BLERtarget," to downlink control information (DCI) as a new information element. The UE may compute the error probability (EP) of received block, and the UE may send 1 bit or multi-bit EP-ACK/NACK feedback together with HARQ-ACK/NACK. For example, if EP > BLERtarget then UE sends EP-NACK, and if EP <= BLERtarget then UE sends EP-ACK. In a further embodiment, a multi-bit option may be provided as discussed in more detail below. The gNB may then use EP-ACK/NACK to adjust OLLA.

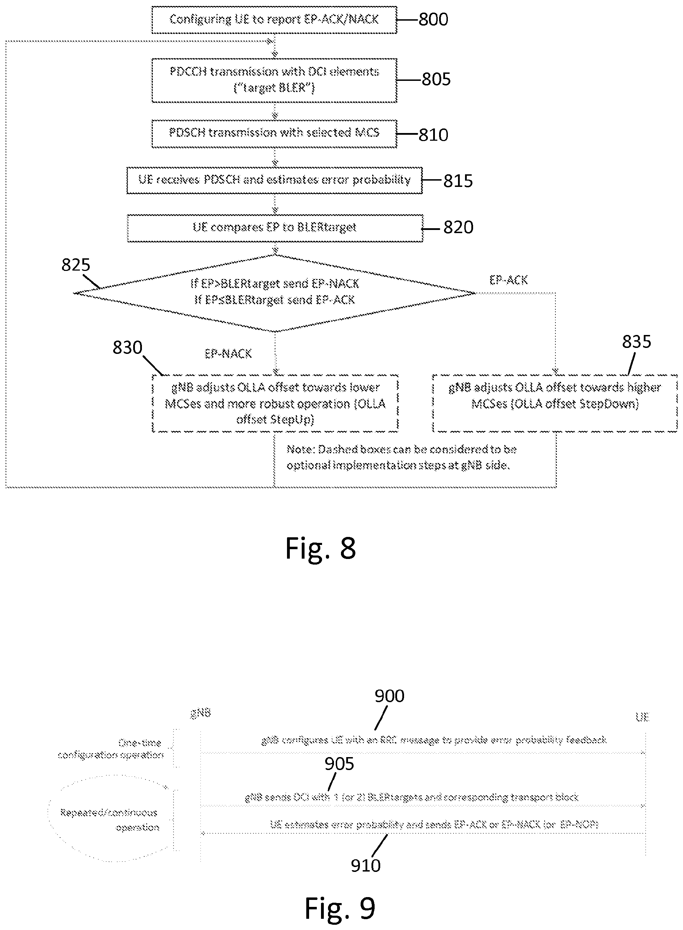

Fig. 8 illustrates an example flow diagram of a method of adjusting OLLA offset, according to one example embodiment. As illustrated in the example of Fig. 8, the method may include, at 800, configuring a UE to report EP-ACK and/or EP-NACK. At 805, PDCCH transmission with DCI elements may occur and, at 810, PDSCH transmission with selected MCS may occur. As further illustrated in the example of Fig. 8, at 815, a UE may receive PDSCH and may estimate EP. At 820, the UE may compare EP to BLERtarget. As illustrated at 825, if EP is greater than BLERtarget then the UE may send EP-ACK and, at 835, the gNB may optionally adjust OLLA offset towards higher MCS than currently used (e.g., OLLA offset StepDown). As also illustrated at 825, if EP is less than or equal to BLERtarget the UE may send EP-NACK and, at 830, the gNB may optionally adjust OLLA offset towards lower MCS than currently used and more robust operation (e.g., OLLA offset StepUp).

Fig. 9 illustrates an example signaling diagram between a gNB and UE, according to one example embodiment. As illustrated in the example of Fig. 9, at 900, the gNB may configure the UE with an RRC message to provide EP feedback. This may be a one-time configuration operation. Then, at 905, the gNB may send DCI with BLER target information, which may include one or two BLER targets, and corresponding transport block. As such, in some embodiments, DCI may contain two BLER targets and a EP-no operation (NOP) feedback option, which can be interpreted by the gNB as "do nothing to OLLA offset". As further illustrated in the example of Fig. 9, at 910, the UE may estimate EP and send EP-ACK or EP-NACK (or EP-NOP) to the gNB. It is noted that procedures 905 and 910 may be repeated or continuous operation.

As mentioned above, according to some embodiments, a gNB can include two BLERtargets in the DCI. In an embodiment, error probability which is larger than the higher threshold results in "EP-NACK" and the OLLA offset may be adjusted by step-up. An error probability which is smaller than the lower threshold results in "EP-ACK" and the OLLA offset may be adjusted by step-down. If the estimated error probability is between the two thresholds, this results in "EP-NOP" and the OLLA offset is not adjusted in gNB. In this case, the selected MCS was optimal or sufficient, fulfilling the target BLER requirement without being too conservative.

According to certain embodiments, two bit feedback may be provided from the UE to the gNB, so that one of three different OLLA offset adjustment options (i.e. step-up, stepdown, do nothing) can be indicated. In some examples, two bit feedback may express four values, where the fourth value could be used to indicate very bad receive conditions, e.g., error probability >10% or >50%.

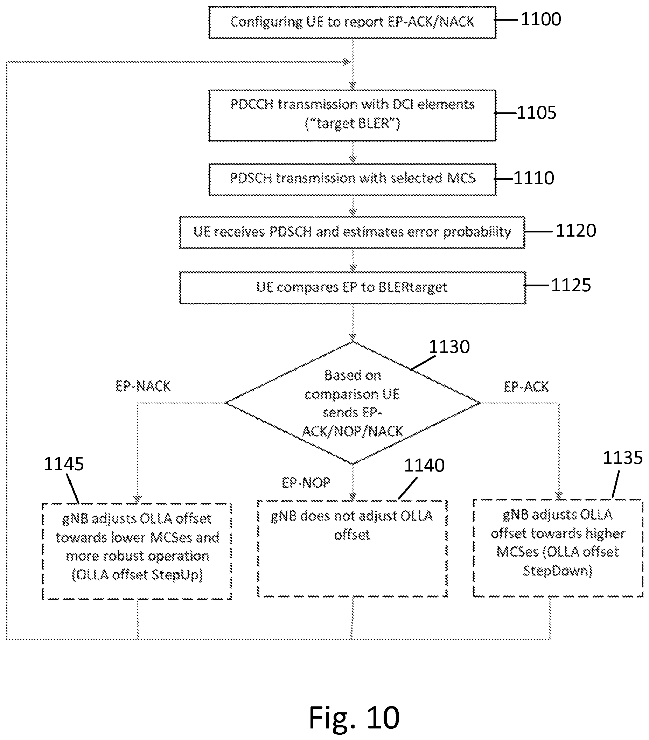

Fig. 10 illustrates an example flow chart of a method utilizing two thresholds and three OLLA actions, according to an example embodiment. As illustrated in the example of Fig. 10, the method may include, at 1100, configuring a UE to report EP-ACK/NACK.

At 1105, PDCCH transmission with DCI elements may occur and, at 1110, PDSCH transmission with selected MCS may occur. As further illustrated in the example of Fig. 10, at 1120, a UE may receive PDSCH and may estimate EP. At 1125, the UE may compare EP to BLERtarget. Based on the comparison, at 1130, the UE may determine to transmit EP-ACK, EP-NACK and/or EP-NOP. If the gNB receives EP-NACK, as shown at 1135, then the gNB may adjust OLLA offset towards higher MCSes (OLLA offset step-down). If the gNB receives EP-NOP, as shown at 1140, then the gNB does not adjust OLLA offset. If the gNB receives EP-NACK, as shown at 1145, then the gNB may adjust OLLA offset towards lower MCSes and more robust operation (OLLA offset step-up). It is noted that, in certain embodiments, if a gNB receives HARQ-NACK, that means that OLLA step-up is applied (HARQ-NACK can override EP-ACK/NACK).

According to certain embodiments, a gNB may maintain multiple OLLA offset values for different transport block sizes (TBSes), for different target BLERs or for different service flows, which results in a 1-dimensional list of OLLA offset values, or the gNB can maintain OLLA offset values as function of both variables (TBS and BLERtarget), which results in a 2-dimensional OLLA offset table.

For example, it may be beneficial to maintain service flow specific offsets because, when a UE has multiple service flows with different periodicities (or some SFs may have irregular activity in time-domain), then different SFs will experience different interference patters, which may have an impact on the resulting OLLA offset.

In an embodiment, in case of HARQ retransmission the BLERtarget indicated in the DCI can mean either the BLERtarget of the current transmission only, or the BLERtarget of the received signal after HARQ-combining (including the combining gain). This can be indicated by an additional DCI control element, or it can be indicated more efficiently by a more static RRC configuration.

Example embodiments may also apply for semi-persistent-scheduling (SPS). In case of SPS, the activation DCI indicates the MCS that will be used for each transmission. Likewise, a default BLERtarget can be indicated in the activation DCI or configured via RRC signalling, for example. If a gNB desires to use some other MCS and/or BLERtarget, it can perform either SPS reactivation or reconfiguration or use dynamic scheduling with a dedicated DCI.

As one example for purposes of illustrating a benefit of one embodiment, if for instance BLERtarget = 1e-5 and received EP=1e-3, it is still likely that the transmission went through correctly (resulting in positive feedback: HARQ ACK), but the gNB receives at the same time "Error-Probability-NACK" because of high decoding error probability and it can take OLLA adjustment actions to react to existing channel conditions. This allows gNB to maintain long term error probability at or below BLERtarget, while the actual transmission may still be error-free. It is noted that this is just one example and many other examples are possible according to certain embodiments.

It should be noted that, according to some embodiments, the procedures, features or blocks of the signaling or flow diagrams described herein, such as those of Fig. 3, Fig. 4, Fig. 6a, Fig. 6b, Fig. 8, Fig. 9, and/or Fig. 10, may be combined in any suitable manner to achieve certain objectives of example embodiments.

In view of the foregoing, certain example embodiments provide several technological improvements, enhancements, and/or advantages over existing technological processes and constitute an improvement at least to the technological field of wireless network control and management. For example, certain embodiments provide OLLA methods having improved reliability and spectral efficiency. For instance, the application of certain embodiments can increase the reliability of URLLC packet transmission significantly without notable increase in radio resource usage. This can be due to link adaptation that is able to adjust SINR offset mostly before errors occur. Hence, some embodiments can improve reliability without increasing radio resource usage, e.g., by using constantly under estimated SINR and too robust MCS. Moreover, in some embodiments, reliability issues caused by packet segmentation can also be taken into account. In addition, certain example embodiments can improve the DL/UL overhead balance as the UL signal becomes lighter. In this way, the gNB can obtain frequent OLLA feedback and can therefore adapt quickly to changing channel conditions while at the same time maintaining low error probability. Accordingly, the use of certain example embodiments results in improved functioning of communications networks and their nodes, such as base stations, eNBs, gNBs, and/or UEs or mobile stations.

In some example embodiments, the functionality of any of the methods, processes, signaling diagrams, algorithms or flow charts described herein may be implemented by software and/or computer program code or portions of code stored in memory or other computer readable or tangible media, and executed by a processor.

In some example embodiments, an apparatus may be included or be associated with at least one software application, module, unit or entity configured as arithmetic operation(s), or as a program or portions of it (including an added or updated software routine), executed by at least one operation processor. Programs, also called program products or computer programs, including software routines, applets and macros, may be stored in any apparatus-readable data storage medium and may include program instructions to perform particular tasks.

A computer program product may include one or more computer-executable components which, when the program is run, are configured to carry out some example embodiments. The one or more computer-executable components may be at least one software code or portions of code. Modifications and configurations for implementing the functionality of an example embodiment may be performed as routine(s), which may be implemented as added or updated software routine(s). In one example, software routine(s) may be downloaded into the apparatus.

As an example, software or computer program code or portions of code may be in source code form, object code form, or in some intermediate form, and it may be stored in some sort of carrier, distribution medium, or computer readable medium, which may be any entity or device capable of carrying the program. Such carriers may include a record medium, computer memory, read-only memory, photoelectrical and/or electrical carrier signal, telecommunications signal, and/or software distribution package, for example. Depending on the processing power needed, the computer program may be executed in a single electronic digital computer or it may be distributed amongst a number of computers. The computer readable medium or computer readable storage medium may be a non-transitory medium.

In other example embodiments, the functionality may be performed by hardware or circuitry included in an apparatus, for example through the use of an application specific integrated circuit (ASIC), a programmable gate array (PGA), a field programmable gate array (FPGA), or any other combination of hardware and software. In yet another example embodiment, the functionality may be implemented as a signal, such as a non-tangible means, that can be carried by an electromagnetic signal downloaded from the Internet or other network.

According to an example embodiment, an apparatus, such as a node, device, or a corresponding component, may be configured as circuitry, a computer or a microprocessor, such as single-chip computer element, or as a chipset, which may include at least a memory for providing storage capacity used for arithmetic operation(s) and/or an operation processor for executing the arithmetic operation(s).

One having ordinary skill in the art will readily understand that the example embodiments as discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be possible. The scope of protection is defined by the attached claims.

## Claims

1. An apparatus, comprising:

    means for determining at least one error probability for at least one successfully received transmission; and
    means for signaling the at least one error probability to a network node to control modulation and coding scheme selection,
    **characterised in that**
    the determining the at least one error probability comprises:

       obtaining error probabilities for layer 1 transmissions received during channel state information reporting interval with a link to system mapping used for mapping measured signal-to-interference-plus-noise ratio and used modulation and coding scheme to transmission error probability;
       calculate mean layer 1 error probability of the channel state information reporting interval from obtained error probabilities; and
       determine protocol data unit error probability according to the following equation:

$$EP_{PDCP} = 1 - \sqrt[n]{(1 - EP_{L1})^k}$$

    wherein $EP_{L1}$ is mean error probability of k successfully received packets at physical layer during a time window, from which the PDCP layer receives n PDCP data packets during the same time window.

2. The apparatus according to claim 1, further comprising means for receiving, from the network node, parameterization for at least one of channel state information or error probability reporting.

3. The apparatus according to any of claims 1-2, wherein the parameterization comprises at least one of periodicity of reporting, at least one protocol layer for which error probability reporting is desired, or an error probability threshold.

4. The apparatus according to any of claims 1-3, wherein the signaling comprises signaling the at least one error probability as part of channel state information reporting to the network node.

5. The apparatus according to any of claims 1-4, wherein the determining the at least one error probability comprises measuring signal-to-interference-plus-noise ratio and comparing the measured signal-to-interference-plus-noise ratio to a given allocation, wherein the given allocation comprises at least one of modulation and coding scheme, channel quality indicator or resource blocks.

6. The apparatus according to any of claims 1-5, wherein the determining comprises determining a cumulative protocol data unit error probability.

7. The apparatus according to any of claims 1-6, wherein the determining comprises determining an averaged protocol data unit error probability.

## Patentansprüche

1. Vorrichtung, umfassend:

    Mittel zum Bestimmen mindestens einer Fehlerwahrscheinlichkeit für mindestens eine erfolgreich empfangene Übertragung; und
    Mittel zum Signalisieren der mindestens einen Fehlerwahrscheinlichkeit an einen Netzwerkknoten, um die Auswahl des Modulations- und Codierungsschemas zu steuern,
**dadurch gekennzeichnet, dass** das Bestimmen der mindestens einen Fehlerwahrscheinlichkeit umfasst:

Erhalten von Fehlerwahrscheinlichkeiten für Schicht-1-Übertragungen, die während eines Berichtsintervalls für Kanalzustandsinformationen empfangen werden, mit einer Verknüpfung zu einem Systemmapping, das zum Mappen eines gemessenen Signal-zu-Interferenz-plus-Rausch-Verhältnisses und eines verwendeten Modulations- und Codierungsschemas auf eine Übertragungsfehlerwahrscheinlichkeit verwendet wird;
Berechnen einer mittleren Schicht-1-Fehlerwahrscheinlichkeit des Berichtsintervalls für Kanalzustandsinformationen aus den erhaltenen Fehlerwahrscheinlichkeiten; und
Bestimmen einer Protokolldateneinheit-Fehlerwahrscheinlichkeit gemäß der folgenden Gleichung:

$$\mathrm{EP_{PDCP}} = 1 - \sqrt[n]{(1 - \mathrm{EP_{L1}})^k}$$

wobei $\mathrm{EP_{L1}}$ die mittlere Fehlerwahrscheinlichkeit von k erfolgreich empfangenen Paketen auf der physikalischen Schicht während eines Zeitfensters ist, aus dem die PDCP-Schicht n PDCP-Datenpakete während desselben Zeitfensters empfängt.

2. Vorrichtung nach Anspruch 1, ferner umfassend Mittel zum Empfangen, von dem Netzwerkknoten, einer Parametrisierung für mindestens eines von Kanalzustandsinformationen oder einem Fehlwahrscheinlichkeitsbericht.

3. Vorrichtung nach einem der Ansprüche 1 bis 2, wobei die Parametrisierung mindestens eines von einer Berichtsperiodizität, mindestens einer Protokollschicht, für die ein Fehlerwahrscheinlichkeitsbericht gewünscht ist, oder einem Fehlerwahrscheinlichkeitsschwellenwert umfasst.

4. Vorrichtung nach einem der Ansprüche 1 bis 3, wobei das Signalisieren das Signalisieren der mindestens einen Fehlerwahrscheinlichkeit als Teil eines Kanalzustandsinformationsberichts an den Netzwerkknoten umfasst.

5. Vorrichtung nach einem der Ansprüche 1 bis 4, wobei das Bestimmen der mindestens einen Fehlerwahrscheinlichkeit das Messen eines Signal-zu-Interferenz-plus-Rausch-Verhältnisses und das Vergleichen des gemessenen Signal-zu-Interferenz-plus-Rausch-Verhältnisses mit einer gegebenen Zuweisung umfasst, wobei die gegebene Zuweisung mindestens eines von einem Modulations- und Codierungsschema, einem Kanalqualitätsindikator oder Ressourcenblöcken umfasst.

6. Vorrichtung nach einem der Ansprüche 1 bis 5, wobei das Bestimmen das Bestimmen einer kumulativen Protokolldateneinheit-Fehlerwahrscheinlichkeit umfasst.

7. Vorrichtung nach einem der Ansprüche 1 bis 6, wobei das Bestimmen das Bestimmen einer gemittelten Protokolldateneinheit-Fehlerwahrscheinlichkeit umfasst.

## Revendications

1. Appareil, comprenant :

des moyens pour déterminer au moins une probabilité d'erreur pour au moins une transmission reçue avec succès ; et
des moyens pour signaler ladite au moins une probabilité d'erreur à un nœud de réseau afin de commander la sélection du schéma de modulation et de codage,
**caractérisé en ce que** la détermination de ladite au moins une probabilité d'erreur comprend :

l'obtention de probabilités d'erreur pour des transmissions de couche 1 reçues pendant un intervalle de rapport d'informations d'état de canal avec un lien vers un mappage de système utilisé pour mapper un rapport signal sur interférence plus bruit mesuré et un schéma de modulation et de codage utilisé vers une probabilité d'erreur de transmission ;
le calcul d'une probabilité d'erreur moyenne de couche 1 de l'intervalle de rapport d'informations d'état de canal à partir des probabilités d'erreur obtenues ; et
la détermination d'une probabilité d'erreur d'unité de données de protocole selon l'équation suivante :

$$EP_{PDCP} = 1 - \sqrt[n]{(1 - EP_{L1})^k}$$

dans laquelle $EP_{L1}$ est la probabilité d'erreur moyenne de k paquets reçus avec succès au niveau de la couche physique pendant une fenêtre temporelle, à partir de laquelle la couche PDCP reçoit n paquets de données PDCP pendant la même fenêtre temporelle.

2. Appareil selon la revendication 1, comprenant en outre des moyens pour recevoir, en provenance du nœud de réseau, une paramétrisation pour au moins l'un parmi des informations d'état de canal ou un rapport de probabilité d'erreur.

3. Appareil selon l'une quelconque des revendications 1 à 2, dans lequel la paramétrisation comprend au moins l'un parmi une périodicité de rapport, au moins une couche de protocole pour laquelle un rapport de probabilité d'erreur est souhaité, ou un seuil de probabilité d'erreur.

4. Appareil selon l'une quelconque des revendications 1 à 3, dans lequel la signalisation comprend la signalisation de ladite au moins une probabilité d'erreur en tant que partie d'un rapport d'informations d'état de canal au nœud de réseau.

5. Appareil selon l'une quelconque des revendications 1 à 4, dans lequel la détermination de ladite au moins une probabilité d'erreur comprend la mesure d'un rapport signal sur interférence plus bruit et la comparaison du rapport signal sur interférence plus bruit mesuré à une allocation donnée, dans lequel l'allocation donnée comprend au moins l'un parmi un schéma de modulation et de codage, un indicateur de qualité de canal ou des blocs de ressources.

6. Appareil selon l'une quelconque des revendications 1 à 5, dans lequel la détermination comprend la détermination d'une probabilité d'erreur cumulative d'unité de données de protocole.

7. Appareil selon l'une quelconque des revendications 1 à 6, dans lequel la détermination comprend la détermination d'une probabilité d'erreur moyennée d'unité de données de protocole.

— — — Outer-loop link adaptation
——— Inner-loop link adaptation

Base station

User Equipment

3) HARQ ACK/NACK feedback

1) CSI reporting

Adjust SINR offset according to BLER target

SINR-to-MCS mapping

CSI measurements

Error detection

4) Provide SINR offset

2) Transmission with selected MCS

## Fig. 1

— — — Outer-loop link adaptation
——— Inner-loop link adaptation

Base station

User Equipment

3) HARQ ACK/NACK feedback

5) PDU-EP reporting

1) CSI reporting

Adjust SINR offset according to BLER target

SINR-to-MCS mapping

CSI measurements

Error detection & PDU-EP determination

4) Provide SINR offset

2) Transmission with selected MCS

## Fig. 2

**Base Station**

**User Equipment**

300

RRC config (CSI/PDU-EP parameterrization)

CSI reporting parameters including e.g. PDU-EP threshold (i.e. reliability or error probability target for desired protocol layer)

Data transmission #1

310

HARQ feedback for #1

Adjust SINR offset Based on HARQ feedback

...

Data transmission #1+i

310

HARQ feedback for #1+1

320

Adjust SINR offset Based on HARQ feedback

Determine PDU-EP for desired protocol layer for next CSI reporting occasion. Compare determined PDU-EP to PDU-EP threshold.

PDU-EP > threshold

330

CSI report (incl. PDU-EP-NACK)

Adjust SINR offset by step-up

350

PDU-EP < threshold

340

CSI report (incl. PDU-EP-ACK)

Data transmission #1

Fig. 3

18

PDU-EP
acknowledgement
reporting occasion

PDU-EP$_{CUM}$ is
calculated from
PDU-EPs obtained
after last PDU-EP$_{CUM}$
reset

PDU-EP$_{CUM}$ ≥ PDU-EP$_{TARGET}$

410

yes — no

420 — Reset cumulative
PDU-EP i.e.
PDU-EP$_{CUM}$ = 0

450 — Report PDU-EP
ACK

430 — Report PDU-EP
NACK

Fig. 4

Fig. 5

Transmitting, to one or more UE(s), parameterization for CSI and/or error probability reporting ——— 600

Receiving, from the UE(s), one or more error probabilities for one or more successfully received transmissions ——— 610

Adjusting, based on the received error probability, MCS selection ——— 620

# Fig. 6a

```
┌─────────────────────────────────────┐
│   Receiving, from a network node,    │
│   parameterization for CSI and/or error │──── 650
│        probability reporting         │
└─────────────────────────────────────┘
                   │
                   ▼
┌─────────────────────────────────────┐
│ Determining an error probability for one │
│    or more successfully received     │──── 660
│            transmissions             │
└─────────────────────────────────────┘
                   │
                   ▼
┌─────────────────────────────────────┐
│   Signaling, to the network node, the │
│ determined error probability for the one │
│    or more successfully received     │──── 670
│            transmissions             │
└─────────────────────────────────────┘
```

# Fig. 6b

Fig. 7a

Fig. 7b

Configuring UE to report EP-ACK/NACK —800

PDCCH transmission with DCI elements ("target BLER") —805

PDSCH transmission with selected MCS —810

UE receives PDSCH and estimates error probability —815

UE compares EP to BLERtarget —820

825

If EP>BLERtarget send EP-NACK
If EP≤BLERtarget send EP-ACK

EP-ACK

EP-NACK

830

835

gNB adjusts OLLA offset towards lower MCSes and more robust operation (OLLA offset StepUp)

gNB adjusts OLLA offset towards higher MCSes (OLLA offset StepDown)

Note: Dashed boxes can be considered to be optional implementation steps at gNB side.

## Fig. 8

gNB    900    UE

One-time configuration operation — gNB configures UE with an RRC message to provide error probability feedback

905

Repeated/continuous operation — gNB sends DCI with 1 (or 2) BLERtargets and corresponding transport block

UE estimates error probability and sends EP-ACK or EP-NACK (or EP-NOR)

910

## Fig. 9

Fig. 10

**EP 4 079 071 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016138957 A1